# EUROPEAN PATENT SPECIFICATION

(11) **EP 4 409 735 B1**
(45) Date of publication and mention of the grant of the patent: **17.09.2025**
(21) Application number: 22789839.2
(22) Date of filing: 28.09.2022
(51) Int. Cl.: H02K 15/12, H02K 15/03, H02K 1/276, H02K 1/2706

(54) **MOTOR ROTOR, MOTOR, VEHICLE AND ASSEMBLING METHOD OF MOTOR ROTOR**
MOTORROTOR, MOTOR, FAHRZEUG UND MONTAGEVERFAHREN DES MOTORROTORS
ROTOR DE MOTEUR, MOTEUR, VÉHICULE ET PROCÉDÉ D'ASSEMBLAGE DE ROTOR DE MOTEUR

(30) Priority: 28.09.2021 CN 202111140898
(43) Date of publication of application: 07.08.2024
(73) Proprietor: Valeo Power Technology (Nanjing) Co., Ltd, Nanjing, Jiangsu 211153 (CN)
(72) Inventor: LIAO, Binhong, Shanghai 201109 (CN); YING, Renlong, Shanghai 201109 (CN); MAO, Huafeng, Shanghai 201109 (CN); HUO, Xing, Shanghai 201109 (CN); LIU, Jinjin, Shanghai 201109 (CN); XIA, Bingbing, Shanghai 201109 (CN); XIE, Xi, Shanghai 201109 (CN); HAN, Long, Shanghai 201109 (CN); CHEN, Zhongxian, Shanghai 201109 (CN); ZHAO, Jingjing, Shanghai 201109 (CN)
(74) Representative: Valeo Powertrain Systems
(86) International application number: PCT/CN2022/122034
(87) International publication number: WO 2023/051584

(56) References cited:
- DE-A1- 102017 214 309
- DE-B4- 102008 027 758
- JP-A- 2012 125 034
- JP-A- H05 122 887
- US-A1- 2015 026 966

## Description

### TECHNICAL FIELD

The present disclosure relates to the field of motor, and more particularly to a motor rotor, a motor including the motor rotor, and a motor vehicle including the motor. The present disclosure also relates to an assembling method of a motor rotor.

### BACKGROUND

At present, in the field of motor, the noise, vibration and harshness of the motor are important problems that affect the performance of the motor, and also are common problems in existing motor products.

An existing motor rotor is usually formed of a set of stacked sheets, in which the sheets are tightly stacked to ensure the rigidity and strength of the components in the motor. Generally, these sheets are stacked to form a main body, then a magnet is mounted in a magnet slot of the main body and glue is filled in the magnet slot of the main body. After the glue is cured, end plates are assembled at both ends of the main body, and then the end plates and the main body are fixed together using fastening bolts. However, it is found that such structure and assembling method may cause some problems, which make the aforementioned problems of noise, vibration and harshness more obvious, and affect the performance of the motor. One of significant problems is caused by screw bolts. Usually, the screw bolt has an elongated shape and extends through the whole length of the rotor. When the motor rotates at a high speed, the fastener would bear a huge centrifugal force, especially at its middle section. This may lead to bending and deformation of the screw bolt and high stress on the screw head, thus causing more obvious vibration and noise when the motor rotates at high speed. With respect to this technical problem, known practices include reducing a distance between the screw bolt and an inner wall of the through hole through which the screw bolt passes, or enlarging a diameter of the screw bolt at some specific axial positions. However, these methods may cause inconvenience in mounting or require for additional processing to components, thus increasing the manufacturing cost.

Therefore, there is a need for a motor rotor and an assembling method thereof, which can reduce or even eliminate the bending and deformation of the screw bolt caused by the centrifugal force during the high-speed rotation of the motor, thereby eliminating the high stress on the screw bolt that may bring the risk of damage, while facilitating the assembling process and saving the manufacturing cost. Document DE102008027758 relates to a similar motor.

### SUMMARY

The objective of the present disclosure is to provide a motor rotor to solve the above technical problems, which can still maintain high rigidity and high strength under high rotor temperature during high-speed rotation, thereby relieving the problems of noise, vibration and harshness of the motor, and thus improving the performance of the motor.

The motor rotor according to the present disclosure includes: a body extending along a rotation axis of a motor, the body is formed of a set of stacked sheets and provided with a fastener through hole; end plates provided at both ends of the body in a direction of the rotation axis to clamp the set of stacked sheets between the end plates, and the end plates are provided with a fastener mounting hole corresponding to the fastener through hole; and a fastener extending through the fastener mounting hole of the end plates and the fastener through hole in the body to clamp the set of stacked sheets between the end plates; wherein at least one end plate is provided with a glue introducing hole throughout a thickness of the end plate, and a fluid communication channel is provided between the glue introducing hole and the fastener through hole to allow glue to flow into the fastener through hole via the glue introducing hole from outside of the end plate.

In the present disclosure, it's significantly beneficial to fill the glue into the space between the fastener and the inner wall of the fastener through hole of the rotor body through the glue introducing hole provided in the end plate after the body of the motor rotor, the end plates at both sides thereof and the fastener are assembled together. First of all, the cured glue can provide all-round support for the fastener when the motor rotates at high speed because the cured glue wraps the screw bolt therein, which especially effectively avoids the bending and deformation of the elongated fastener caused by centrifugal force during the high-speed rotation of the motor, thereby eliminating the high stress which is bore by the fastener and may bring the risk of damage. Secondly, compared with the technical solution in the prior art of changing the structure and size of the fastener and/or of the component itself that is matched with the fastener, the technical solution according to the present disclosure does not need these structural changes and can still use general components, thereby saving the manufacturing cost. Thirdly, the glue is introduced after the body, the end plates and the fastener are fixedly assembled together, thus avoiding the adverse influence to the pressing force between the stacked sheets forming the rotor body, which influence is attributed to the softening of the glue caused by the high rotor temperature during the high-speed rotation of the motor.

In one embodiment, the fluid communication channel is delimited by a first communication groove provided on the at least one end plate and a side of the body facing this end plate.

In one embodiment, the fluid communication channel is delimited by a second communication groove provided on the body and a side of the at least one end plate facing the body.

According to the present disclosure, the fluid path between the outside of the motor rotor and the internal fastener through hole of the motor rotor is established via the communication grooves on the end plates or the rotor body, so that the manufacturing cost is low and the assembling process is simple, and it is not necessary to carry out additional alignment work on the screw bolts or to spend additional manpower as in the prior art.

In one embodiment, the body is provided with a magnet mounting slot extending from one end to the other end of the body, and the at least one end plate is provided with a magnet introducing opening corresponding to the magnet mounting slot. Therefore, after the body of the motor rotor, the end plates at both sides thereof and the fastener are assembled together, the magnet can still be mounted in the rotor body and the glue for fixing the magnet can still be introduced, thus avoiding the adverse influence to the pressing force between the stacked sheets forming the rotor body which is attributed to the softening of the glue caused by the high rotor temperature during the high-speed rotation of the motor.

In one embodiment, the glue introducing hole is the magnet introducing opening. That is to say, it serves for both the functions of allowing glue to be filled into the fastener through hole and allowing the permanent magnet to be mounted into the permanent magnet mounting slot of the body. After the body of the motor rotor, the end plates at both sides thereof and the fastener are assembled together, the permanent magnet is inserted and also glue is filled through this dual-purpose hole. On the one hand, it is possible to prevent the curing of glue and the softening of glue under high rotor temperature during the high-speed rotation of the motor from adversely affecting the pressing force of the stacked sheets (for example, the pressing force of the stacked sheets is reduced, so that the gap between the stacked sheets is increased, the clamping effect of the end plates is reduced and the fastener is loosened, thereby weakening the structural strength and rigidity of the motor rotor); and on the other hand, glue can be poured into the permanent magnet mounting slot and the fastener through hole just by a single glue filling operation, thus simplifying the operation and making the processing of the end plates simpler.

In one embodiment, the glue introducing hole is a glue filling opening distinguished from the magnet introducing opening.

In one embodiment, the fastener is a screw bolt.

Another aspect of the present disclosure also relates to a motor including the motor rotor described above.

Yet another aspect of the present disclosure also relates to a vehicle including the motor described above. The vehicle may be an electric vehicle or a hybrid vehicle.

The present disclosure also relates to an assembling method of a motor rotor including the following steps: providing a body which extends along a rotation axis of a motor and is formed of a set of stacked sheets, wherein the body is provided with a fastener through hole;

providing end plates which are provided on both ends of the body along a direction of the rotation axis to clamp the set of stacked sheets between the end plates, wherein the end plate is provided with a fastener mounting hole corresponding to the fastener through hole, wherein at least one end plate is provided with a glue introducing hole throughout a thickness of the end plate, and a fluid communication channel is provided between the glue introducing hole and the fastener through hole; providing a fastener which extends through the fastener mounting hole and the fastener through hole to clamp the set of stacked sheets between the end plates; and providing glue such that the glue flows into the fastener through hole via the glue introducing hole from outside of the end plate.

In one embodiment, the fluid communication channel is delimited by a first communication groove provided on the at least one end plate and a side of the body facing this end plate.

In one embodiment, the fluid communication channel is delimited by a second communication groove provided on the body and a side of the end plate facing the body.

In one embodiment, the body is provided with a magnet mounting slot extending from one end to the other end of the body, and the at least one end plate is provided with a magnet introducing opening corresponding to the magnet mounting slot.

In one embodiment, the glue introducing hole is the magnet introducing opening.

In one embodiment, the glue introducing hole is a glue filling opening distinguished from the magnet introducing opening.

### BRIEF DESCRIPTION OF THE DRAWINGS

In order to more clearly illustrate the technical solutions of the embodiments of the present disclosure, the drawings necessary for the explanations of the embodiments will be briefly described in the following; it is obvious that the described drawings below are only related to some embodiments of the present disclosure, and for those ordinary skilled in the art, other drawings can be obtained according to these drawings without creative labors. The following drawings are not deliberately drawn according to actual scale, but the emphasis is on showing the concept of the present disclosure.
Fig. 1 is a schematic perspective view of a motor rotor according to a first embodiment of the present disclosure;
Fig. 2 is a schematic plan view of a side of an end plate of the motor rotor facing a body according to the first embodiment of the present disclosure;
Fig. 3 is a schematic plan view of a side of the body of the motor rotor facing the end plate according to the first embodiment of the present disclosure;
Figs. 4 and 5 respectively are schematic perspective views of an outer side and a side facing the body of the end plate according to the first embodiment of the present disclosure;
Fig. 6 is a partial enlarged view of the area of box A in Fig. 1;
Fig. 7 is a partial sectional view of the motor rotor according to the first embodiment of the present disclosure, taken along a plane where an extension axis of a fastener lies;
Fig. 8 is a schematic plan view of a side of the end plate of the motor rotor facing the body according to a second embodiment of the present disclosure;
Fig. 9 is a schematic plan view of a side of the body of the motor rotor facing the end plate according to the second embodiment of the present disclosure; and
Fig. 10 is a schematic perspective view of the body according to the second embodiment of the present disclosure.

### DETAILED DESCRIPTION

Hereinafter, the technical solutions of the embodiments will be described in a clearly and fully understandable way in connection with the drawings. Apparently, the described embodiments are just a part but not all of the embodiments of the disclosure. Based on the described embodiments herein, those skilled in the art can obtain other embodiment(s), without any inventive work, which should be within the scope of the disclosure.

In the present disclosure, the axial direction refers to the direction along the rotation axis X of the motor rotor, and the radial direction refers to the direction perpendicular to the rotation axis X.

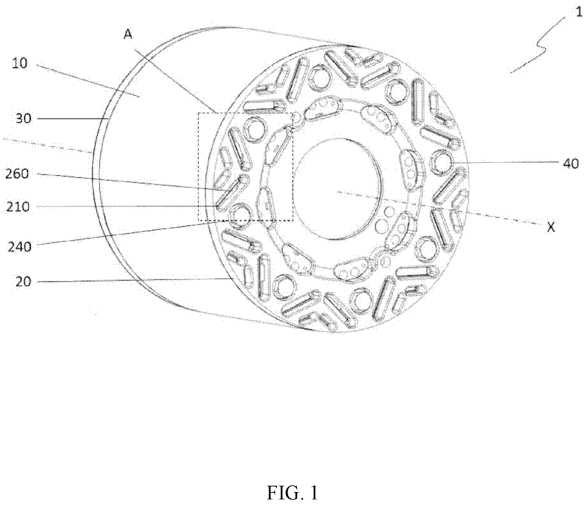

Fig. 1 shows a schematic perspective assembly view of a motor rotor 1 according to the present disclosure, showing an end plate 20 at a driving side of the motor rotor 1. The motor rotor 1 can be mounted in a motor housing of a vehicle motor (not shown), such as a permanent magnet motor. The vehicle may be an electric vehicle or a hybrid vehicle.

In the working state, the motor rotor 1 rotates at a high speed around a rotation axis X of the motor, and the rotor temperature can be very high. In order to better explain the technical solution according to the present disclosure, in the drawings of the present disclosure, the motor shaft is not shown which extends through the center of the motor rotor 1 along the rotation axis X.

As shown in Fig. 1, the motor rotor 1 may include a body 10. The body 10 has a cylindrical overall external shape, and the body 10 extends along the rotation axis X of the motor and rotates around the rotation axis X during working. The body 10 is formed of a set of stacked sheets. These stacked sheets are tightly stacked together with sufficient pressing force to ensure the rigidity and strength of the motor rotor. In order to ensure that the stacked sheets can still be tightly held at high temperature during the high-speed rotation of the motor, end plates 20 and 30 are provided at both ends of the body 10 in the direction of the rotation axis X, for clamping the set of stacked sheets between the two end plates 20 and 30.

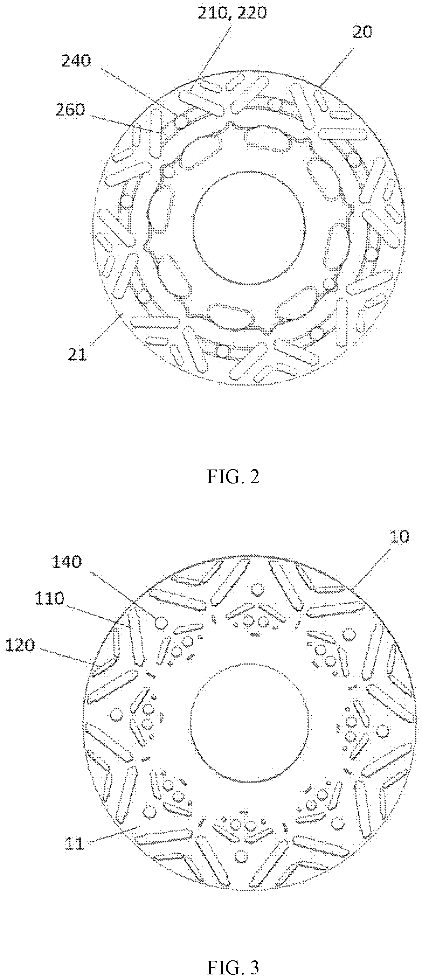

As shown in Fig. 2, the end plates 20 and 30 may have a disc shape, corresponding to a circular shape of the body 10 in a radial plane (Fig. 3).

In order to clamp the stacked sheets between the two end plates 20 and 30, the motor rotor 1 further includes a fastener 40. The motor rotor 1 may include a plurality of fasteners 40 which may have an elongated shape. In an example of the present disclosure, the fastener 40 may be a screw bolt.

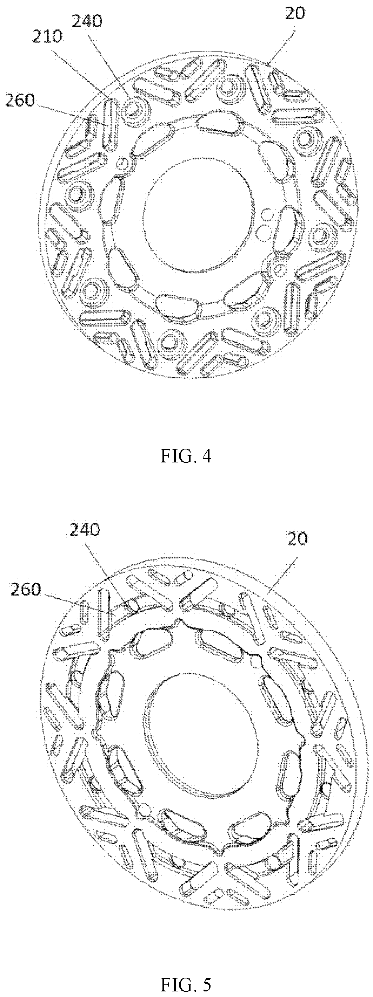

Accordingly, the body 10 may include a fastener through hole 140, as shown in Fig. 3. The fastener through hole 140 of the body 10 may be a through hole extending through the body 10 from one end to the other end of the body 10 in the direction of the rotation axis X. The end plate 20 includes a fastener mounting hole 240, as shown in Figs. 2 and 4. The end plate 30 also includes a fastener mounting hole (not shown). The fastener mounting holes of the end plates 20 and 30 are through holes penetrating through the thickness of the end plates. In the present disclosure, the thickness of the end plate refers to the dimension of the end plate in the direction of the rotation axis X. The fastener mounting hole 240 of the end plate 20, the fastener mounting hole of the end plate 30 and the fastener through hole 140 of the body 10 are in one-to-one correspondence with each other, and are communicated with each other to form a hollow space for the fastener 40 to pass therethrough.

In the assembling process, firstly, the fastener 40 passes through the fastener mounting hole 240 of the end plate 20 from one side of the end plate 20, then passes through the corresponding fastener through hole 140 of the body 10, and finally extends out of the fastener mounting hole of the end plate 30 to be fixed at the outside of the end plate 30. For example, if the fastener is a screw bolt, it can be fixed by fixing a screw nut at the other end of the screw bolt. Thereby, the body 10 and the end plates 20, 30 at both ends of the body 10 are firmly assembled together, and the end plates 20 and 30 clamp the stacked sheets therebetween with sufficient pressing force.

In order to solve the problem of bending and deformation of the fastener when the motor rotates at a high speed in the prior art, the present disclosure proposes to fill glue in the fastener through hole 140 of the body 10 of the motor rotor after the fastener 40 is mounted, that is, to introduce glue into the space between the fastener 40 and the inner wall of the fastener through hole 140. After cured, the glue can provide strong support for the fastener when the motor rotates at high speed, and prevent the fastener from deformation caused by centrifugal force. Therefore, in the technical solution of the present disclosure, at least one end plate, the driving side end plate 20 in the example shown in the figures, may be provided with a glue introducing hole 210 penetrating through the thickness of the end plate 20, as shown in Figs. 1 and 2. A fluid communication channel is provided between the glue introducing hole 210 and the fastener through hole 140 (Fig. 3) to allow glue to enter through the glue introducing hole 210 from the outside of the end plate 20, then flow through the fluid communication channel, and finally flow into the fastener through hole 140.

The arrangement of the fluid communication channel between the glue introducing hole 210 and the fastener through hole 140 will be described in details by the following examples.

Figs. 1 to 7 show a first embodiment of a motor rotor according to the present disclosure. First of all, please refer to Figs. 2 and 5, which show the side of the end plate 20 facing the body 10 of the motor rotor 1, also called a back side 21, in a front view and a perspective view, respectively.

A first communication groove 260 may be provided on the back side 21 of the end plate 20. For clarity and brevity, only one of the first communication grooves 260 is marked. The first communication groove 260 is a recess provided on the back side of the end plate 20 and is communicated with the glue introducing hole 210, so that the glue flowing into the glue introducing hole 210 can flow into the first communication groove 260. The glue introducing hole 210 is also communicated with the fastener through hole 140 (Fig. 3) in the body 10 of the motor rotor 1, whereby the glue in the first communication groove 260 can flow into the corresponding fastener through hole 140. In this way, the fluid communication channel between the glue introducing hole 210 and the fastener through hole 140 is delimited by the first communication groove 260 and the side 11 (Fig. 3) of the body 10 facing the end plate 20, as shown in Fig. 1.

In a preferred embodiment, the first communication groove 260 may also be in fluid communication with the fastener mounting hole 240 in the end plate 20, so as to be communicated with the fastener through hole 140 in the body 10 via the fastener mounting hole 240, as shown in Figs. 2 and 5. In a possible embodiment, the glue introducing hole 210 has an overlapping area with the fastener through hole 140 in a radial plane perpendicular to the rotation axis X.

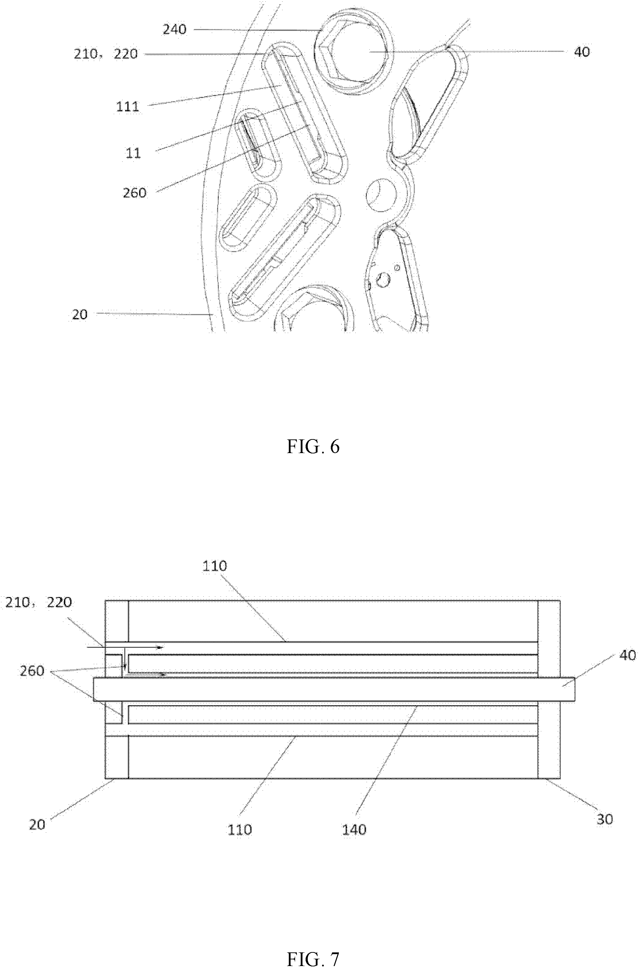

A preferred example according to the first embodiment of the present disclosure will be described below with reference to the partially enlarged view of Fig. 6 and the sectional view of Fig. 7.

In Fig. 6, the body 10, the end plate 20 and the fastener 40 of the motor rotor have been assembled in place, and the permanent magnets 111 have been mounted in the body 10. In order to mount the permanent magnets, the body 10 is provided with magnet mounting slots 110 and 120 extending from one end to the other end thereof, which may be through holes extending through the body 10 along the rotation axis X. In a radial plane perpendicular to the rotation axis X, the magnet mounting slots 110 and 120 have a generally elongated trapezoidal shape (Fig. 3) but may have different lengths and widths, which can be set as required. The magnet mounting slots 110 and 120 can be arranged in groups. In the example shown in Fig. 3, there are total eight groups each including two magnet mounting slots 110 and two magnet mounting slots 120, with one fastener through hole 140 arranged between every adjacent two groups. A plurality of groups of magnet mounting slots and a plurality of fasteners can be evenly distributed in the body 10 around the rotation axis X.

The end plate 20 is provided with a magnet introducing opening 220 corresponding to the magnet mounting slot 110. For example, the magnet introducing opening 220 is communicated with the magnet mounting slot 110 in the direction of the rotation axis X, so that the permanent magnet 111 can be inserted into the magnet mounting slot 110 of the body 10 through the magnet introducing opening 220 after the end plate is mounted.

In the preferred example as shown, the glue introducing hole 210 is just the magnet introducing opening 220, that is, it serves both the functions of allowing glue to be filled into the fastener through hole 140 and allowing the permanent magnet to be mounted into the permanent magnet mounting slot 110 of the body 10.

After the body 10 of the motor rotor 1, the two end plates 20 and 30 at both sides thereof, and the fastener 40 are assembled together, the permanent magnet can be inserted and also the glue can be filled through this dual-purpose hole, so that on the one hand, it is possible to prevent the curing of the glue and the softening of the glue at the high rotor temperature during the high-speed rotation of the motor from adversely affecting the pressing force to the stacked sheets (for example, the pressing force to the stacked sheets is reduced, so that the gap between the stacked sheets will be increased, the clamping effect of the end plates is reduced and the fastener is loosened, thereby weakening the structural strength and rigidity of the motor rotor), and on the other hand, glue can be poured into the permanent magnet mounting slot 110 and the fastener through hole 140 just by a single glue filling operation, which simplifies the operation and makes the processing of the end plates simpler.

Fig. 7 schematically shows a partial sectional view of the motor rotor according to the first embodiment. Fig. 7 shows a section taken along a plane of the extension axis of the fastener 40, which is only schematic to explain the technical solution according to the present disclosure. As shown in Fig. 7 and combined with Figs. 2, 3 and 6, the first communication groove 260 and the side 11 of the body 10 facing the end plate 20 delimit a fluid communication channel between the glue introducing hole 210 and the fastener through hole 140. In the assembling process, the glue enters the glue introducing hole 210 firstly, then enters the first communication groove 260, and then enters the fastener through hole 140. In the case where the glue introducing hole is also the magnet introducing opening, the glue also flows into the magnet mounting slot 110, as shown by the arrow in Fig. 7.

In another embodiment not shown, the glue introducing hole 210 may be a glue filling opening distinguished from the magnet introducing opening 220, that is, they are different openings in the end plate.

In the examples shown in Figs. 1-7, the glue introducing holes 210 are provided at both sides of the fastener mounting hole 240 of the end plate 20. It will be understood, the glue introducing holes 210 may be provided only at one side of the fastener mounting hole 240 or at a plurality of positions around the fastener mounting hole 240.

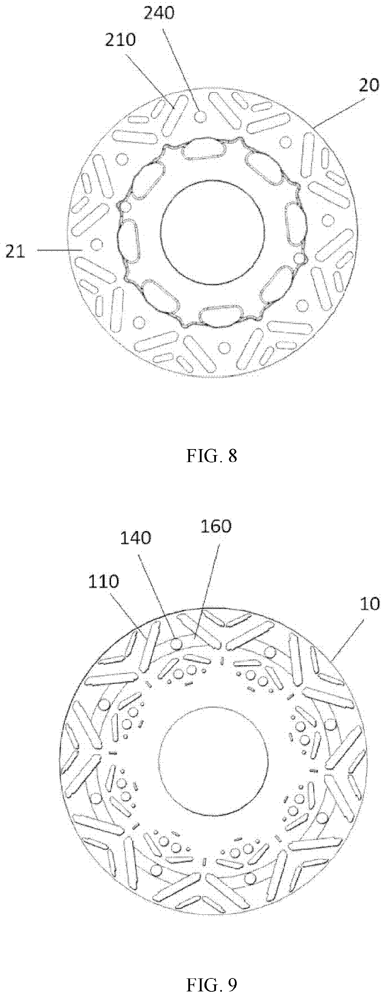

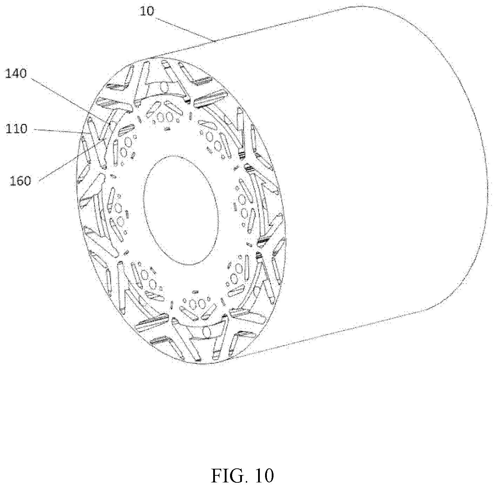

Figs. 8-10 show a motor rotor according to a second embodiment of the present disclosure, which is different from the first embodiment in that the body 10 is provided with a second communication groove 160, and the fluid communication channel between the glue introducing hole 210 and the fastener through hole 140 in the body 10 is delimited by the second communication groove 160 and the side 21 of the end plate 20 facing the body 10. The second communication groove 160 is a groove in the body 10, and is communicated with the fastener through hole 140. The glue enters from the glue introducing hole 210, then enters the second communication groove 160, and then flows into the fastener through hole 140.

The assembling method of the motor rotor 1 according to the present disclosure will be described below, which includes the following steps:
providing a body 10 which, as described above, extends along a rotation axis X of a motor and is formed of a set of stacked sheets, wherein the body 10 is provided with a fastener through hole 140;
providing end plates 20, 30 which are provided at both ends of the body 10 in a direction of the rotation axis X to clamp the set of stacked sheets between the end plates 20, 30, and the end plates 20, 30 are provided with a fastener mounting hole 240 corresponding to fastener through hole, wherein at least one end plate (for example, the driving side end plate 20) is provided with a glue introducing hole 210 penetrating through the thickness of the end plate, and a fluid communication channel is provided between the glue introducing hole 210 and the fastener mounting hole 240;
providing a fastener 40 which extends through the fastener mounting hole 240 of the end plate 20, the fastener through hole 140 and the fastener mounting hole of the end plate 30 to clamp the set of stacked sheets between the end plates 20 and 30; and
then providing glue so that the glue flows into the fastener through hole from the outside of the end plate via the glue introducing hole.

As mentioned above, the fluid communication channel can be delimited by the first communication groove 260 provided on the end plate 20 and the side of the body 10 facing the end plate 20; alternatively, the fluid communication channel is delimited by the second communication groove 160 provided on the body 10 and the side of the end plate 20 facing the body 10.

In the case where the glue introducing hole is the magnet introducing opening, the permanent magnet is inserted into the magnet mounting slot of the body 10 via this hole. The glue can be introduced before or after the magnet is mounted.

According to another aspect of the present disclosure, a motor is provided, including the motor rotor as described above. It can realize the function of the motor rotor as mentioned above, and has the advantages as mentioned above.

According to yet another aspect of the present disclosure, a motor vehicle is provided, including the motor as described above.

The motor vehicle may be a plug-in hybrid electric vehicle, or it may also be a battery electric vehicle or other types of motor vehicles. Based on the above, the motor vehicle can realize the functions of the motor components and the motor as described above, and has the advantages as described above.

Some features, structures, or characteristics in one or more embodiments of the present disclosure may be combined appropriately.

Unless otherwise defined, all terms (including technical and scientific terms) used here have the same meanings as those commonly understood by those of ordinary skill in the art to which the present invention belongs. It should also be understood that terms such as those defined in common dictionaries should be interpreted as having meanings consistent with their meanings in the context of the related art, and should not be interpreted in idealized or extremely formal meanings, unless explicitly defined as such here.

The above is an explanation of the present disclosure, but it should not be considered as a limitation thereto. Although several exemplary embodiments of the present disclosure have been described, those skilled in the art will easily understand that many modifications can be made to the exemplary embodiments without departing from the novel teaching and advantages of the present disclosure. Therefore, all these modifications are intended to be included in the scope of the present disclosure as defined in the claims. It should be understood that the above is an explanation of the present disclosure, and the present disclosure should not be regarded as limited to the specific embodiments as disclosed, and modifications to the disclosed embodiments and other embodiments are contemplated as being alternative forms of the invention as far as they do not depart from the scope of the invention, which is defined by the appended claims.

## Claims

1. A motor rotor (1) comprising:
a body (10) extending along a rotation axis of a motor, the body being formed of a set of stacked sheets and provided with a fastener through hole (140);
end plates (20, 30) provided on both ends of the body (10) along a direction of the rotation axis to clamp the set of stacked sheets between the end plates, the end plates being provided with a fastener mounting hole (240) corresponding to the fastener through hole (140);
a fastener (40) extending through the fastener mounting hole (240) of the end plates and the fastener through hole (140) in the body to clamp the set of stacked sheets between the end plates;
wherein at least one end plate (20) is provided with a glue introducing hole (210) throughout a thickness of this end plate, and a fluid communication channel is provided between the glue introducing hole and the fastener through hole (140) to allow glue to flow into the fastener through hole via the glue introducing hole (210) from outside of this end plate (20).

2. The motor rotor as claimed in claim 1, wherein the fluid communication channel is delimited by first communication groove (260) provided on the at least one end plate (20) and a side of the body facing this end plate.

3. The motor rotor as claimed in claim 1, wherein the fluid communication channel is delimited by a second communication groove (160) provided on the body and a side of the at least one end plate facing the body.

4. The motor rotor as claimed in any of claims 1 to 3, wherein the body is provided with a magnet mounting slot extending from one end to the other end of the body, and the at least one end plate is provided with a magnet introducing opening (220) corresponding to the magnet mounting slot.

5. The motor rotor as claimed in claim 4, wherein the glue introducing hole is the magnet introducing opening.

6. The motor rotor as claimed in claim 4, wherein the glue introducing hole is a glue filling opening distinguished from the magnet introducing opening.

7. The motor rotor as claimed in any of claims 1 to 3, wherein the fastener is a screw bolt.

8. A motor comprising the motor rotor claimed in any of claims 1 to 7.

9. A vehicle comprising the motor as claimed in claim 8.

10. An assembling method for motor rotor comprising:
providing a body which extends along a rotation axis of motor and is formed of a set of stacked sheets, the body being provided with a fastener through hole;
providing end plates which are provided on both ends of the body along a direction of the rotation axis to clamp the set of stacked sheets between the end plates, the end plate being provided with a fastener mounting hole corresponding to the fastener through hole, wherein at least one end plate is provided with a glue introducing hole throughout thickness of this end plate, and a fluid communication channel is provided between the glue introducing hole and the fastener through hole;
providing a fastener which extends through the fastener mounting hole and the fastener through hole to clamp the set of stacked sheets between the end plates;
providing glue such that the glue flows into the fastener through hole via the glue introducing hole from outside of this end plate.

11. The assembling method as claimed in claim 10, wherein the fluid communication channel is delimited by first communication groove provided on the at least one end plate and a side of the body facing this end plate.

12. The assembling method as claimed in claim 10, wherein the fluid communication channel is delimited by a second communication groove provided on the body and a side of the at least one end plate facing the body.

13. The assembling method as claimed in any of claim 10 to 12, wherein the body is provided with a magnet mounting slot extending from one end to the other end of the body, and the at least one end plate is provided with a magnet introducing opening corresponding to the magnet mounting slot.

14. The assembling method as claimed in claim 13, wherein the glue introducing hole is the magnet introducing opening.

15. The assembling method as claimed in claim 13, wherein the glue introducing hole is a glue filling opening distinguished from the magnet introducing opening.

## Patentansprüche

1. Ein Motorrotor (1), umfassend:
einen Körper (10), der sich entlang einer Rotationsachse eines Motors erstreckt, wobei der Körper (10) aus einem Satz gestapelter Bleche gebildet und mit einer Befestigungsdurchgangsbohrung (140) versehen ist;
Endplatten (20, 30), die an beiden Enden des Körpers (10) entlang einer Richtung der Rotationsachse angeordnet sind, um den Satz gestapelter Bleche zwischen den Endplatten (20, 30) zu spannen, wobei die Endplatten (20, 30) mit einer Befestigungsaufnahmebohrung (240) versehen sind, die mit der Befestigungsdurchgangsbohrung (140) korrespondiert;
ein Befestigungselement (40), das sich durch die Befestigungsaufnahmebohrung (240) der Endplatten (20, 30) und die Befestigungsdurchgangsbohrung (140) in dem Körper (10) erstreckt, um den Satz gestapelter Bleche zwischen den Endplatten (20, 30) zu spannen;
wobei mindestens eine Endplatte (20) mit einer Klebstoffeinfüllöffnung (210) durch die Dicke dieser Endplatte (20) versehen ist und ein Fluidkommunikationskanal zwischen der Klebstoffeinfüllöffnung (210) und der Befestigungsdurchgangsbohrung (140) vorgesehen ist, um zu ermöglichen, dass Klebstoff von außerhalb dieser Endplatte (20) über die Klebstoffeinfüllöffnung (210) in die Befestigungsdurchgangsbohrung (140) fließt.

2. Motorrotor (1) nach Anspruch 1, wobei der Fluidkommunikationskanal durch eine erste Kommunikationsnut (260) begrenzt ist, die an der mindestens einen Endplatte (20) und einer dieser Endplatte (20) zugewandten Seite des Körpers (10) vorgesehen ist.

3. Motorrotor (1) nach Anspruch 1, wobei der Fluidkommunikationskanal durch eine zweite Kommunikationsnut (160) begrenzt ist, die an dem Körper (10) und einer dem Körper (10) zugewandten Seite der mindestens einen Endplatte (20) vorgesehen ist.

4. Motorrotor (1) nach einem der Ansprüche 1 bis 3, wobei der Körper (10) mit einem Magnetaufnahme-Schlitz versehen ist, der sich von einem Ende zum anderen Ende des Körpers (10) erstreckt, und die mindestens eine Endplatte (20) mit einer Magneteinführöffnung (220) versehen ist, die mit dem Magnetaufnahme-Schlitz korrespondiert.

5. Motorrotor (1) nach Anspruch 4, wobei die Klebstoffeinfüllöffnung (210) die Magneteinführöffnung (220) ist.

6. Motorrotor (1) nach Anspruch 4, wobei die Klebstoffeinfüllöffnung (210) eine von der Magneteinführöffnung (220) verschiedene Klebstofffüllöffnung (210) ist.

7. Motorrotor (1) nach einem der Ansprüche 1 bis 3, wobei das Befestigungselement (40) eine Schraube ist.

8. Motor mit dem Motorrotor (1) nach einem der Ansprüche 1 bis 7.

9. Fahrzeug mit dem Motor nach Anspruch 8.

10. Verfahren zur Montage eines Motorrotors, umfassend:
Bereitstellen eines Körpers, der sich entlang einer Rotationsachse eines Motors erstreckt und aus einem Satz gestapelter Bleche gebildet ist, wobei der Körper mit einer Befestigungsdurchgangsbohrung versehen ist;
Bereitstellen von Endplatten, die an beiden Enden des Körpers entlang einer Richtung der Rotationsachse angeordnet sind, um den Satz gestapelter Bleche zwischen den Endplatten zu spannen, wobei eine Endplatte mit einer Klebstoffeinfüllöffnung über die gesamte Dicke der Endplatte versehen ist und ein Fluidkommunikationskanal zwischen der Klebstoffeinfüllöffnung und der Befestigungsdurchgangsbohrung vorgesehen ist;
Bereitstellen eines Befestigungselements, das sich durch die Befestigungsaufnahmebohrung und die Befestigungsdurchgangsbohrung erstreckt, um den Satz gestapelter Bleche zwischen den Endplatten zu spannen;
Bereitstellen von Klebstoff, so dass der Klebstoff von außerhalb dieser Endplatte über die Klebstoffeinfüllöffnung in die Befestigungsdurchgangsbohrung fließt.

11. Verfahren nach Anspruch 10, wobei der Fluidkommunikationskanal durch eine erste Kommunikationsnut begrenzt ist, die an der mindestens einen Endplatte und einer dieser Endplatte zugewandten Seite des Körpers vorgesehen ist.

12. Verfahren nach Anspruch 10, wobei der Fluidkommunikationskanal durch eine zweite Kommunikationsnut begrenzt ist, die an dem Körper und einer dem Körper zugewandten Seite der Endplatte vorgesehen ist.

13. Verfahren nach einem der Ansprüche 10 bis 12, wobei der Körper mit einem Magnetaufnahme-Schlitz versehen ist, der sich von einem Ende zum anderen Ende des Körpers erstreckt, und wobei die mindestens eine Endplatte mit einer Magneteinführöffnung versehen ist, die mit dem Magnetaufnahme-Schlitz korrespondiert.

14. Verfahren nach Anspruch 13, wobei die Klebstoffeinfüllöffnung die Magneteinführöffnung ist.

15. Verfahren nach Anspruch 13, wobei die Klebstoffeinfüllöffnung eine von der Magneteinführöffnung verschiedene Klebstofffüllöffnung ist.

## Revendications

1. Rotor de moteur (1), comprenant :
un corps (10) s'étendant le long d'un axe de rotation d'un moteur, ledit corps (10) étant formé d'un ensemble de tôles empilées et pourvu d'un trou de passage (140) pour un élément de fixation;
des plaques d'extrémité (20, 30) disposées aux deux extrémités du corps (10) dans la direction de l'axe de rotation, afin de serrer l'ensemble des tôles empilées entre les plaques d'extrémité (20, 30), lesdites plaques étant pourvues d'un trou de montage (240) pour élément de fixation correspondant au trou de passage (140);
un élément de fixation (40) traversant le trou de montage (240) des plaques d'extrémité (20, 30) et le trou de passage (140) dans le corps (10), afin de serrer l'ensemble des tôles empilées entre les plaques d'extrémité (20, 30);
au moins une plaque d'extrémité (20) étant pourvue d'un orifice d'introduction de colle (210) sur toute l'épaisseur de cette plaque (20), et un canal de communication de fluide étant prévu entre l'orifice d'introduction de colle (210) et le trou de passage (140), afin de permettre l'écoulement de la colle depuis l'extérieur de ladite plaque (20) dans le trou de passage (140) par l'intermédiaire de l'orifice d'introduction de colle (210).

2. Rotor de moteur (1) selon la revendication 1, dans lequel le canal de communication de fluide est délimité par une première rainure de communication (260) prévue sur ladite au moins une plaque d'extrémité (20) et sur une face du corps (10) orientée vers cette plaque (20).

3. Rotor de moteur (1) selon la revendication 1, dans lequel le canal de communication de fluide est délimité par une seconde rainure de communication (160) prévue sur le corps (10) et sur une face de ladite au moins une plaque d'extrémité (20) orientée vers le corps (10).

4. Rotor de moteur (1) selon l'une des revendications 1 à 3, dans lequel le corps (10) est pourvu d'une rainure de logement d'aimant s'étendant d'une extrémité à l'autre du corps (10), et dans lequel ladite au moins une plaque d'extrémité (20) est pourvue d'une ouverture d'introduction d'aimant (220) correspondant à ladite rainure.

5. Rotor de moteur (1) selon la revendication 4, dans lequel l'orifice d'introduction de colle (210) est l'ouverture d'introduction d'aimant (220).

6. Rotor de moteur (1) selon la revendication 4, dans lequel l'orifice d'introduction de colle (210) est un orifice de remplissage de colle distinct de l'ouverture d'introduction d'aimant (220).

7. Rotor de moteur (1) selon l'une des revendications 1 à 3, dans lequel l'élément de fixation (40) est une vis.

8. Moteur comportant un rotor de moteur (1) selon l'une quelconque des revendications 1 à 7.

9. Véhicule comportant un moteur selon la revendication 8.

10. Procédé d'assemblage d'un rotor de moteur, comprenant:
fournir un corps s'étendant le long d'un axe de rotation d'un moteur et formé d'un ensemble de tôles empilées, ledit corps étant pourvu d'un trou de passage pour un élément de fixation;
fournir des plaques d'extrémité disposées aux deux extrémités du corps dans la direction de l'axe de rotation pour serrer l'ensemble des tôles empilées entre lesdites plaques, au moins une plaque d'extrémité étant pourvue d'un orifice d'introduction de colle sur toute son épaisseur, et un canal de communication de fluide étant prévu entre l'orifice d'introduction de colle et le trou de passage;
fournir un élément de fixation s'étendant à travers le trou de montage et le trou de passage pour serrer l'ensemble des tôles empilées entre les plaques d'extrémité;
fournir de la colle de telle sorte que celle-ci s'écoule depuis l'extérieur de ladite plaque d'extrémité dans le trou de passage par l'intermédiaire de l'orifice d'introduction de colle.

11. Procédé selon la revendication 10, dans lequel le canal de communication de fluide est délimité par une première rainure de communication prévue sur ladite au moins une plaque d'extrémité et sur une face du corps orientée vers cette plaque.

12. Procédé selon la revendication 10, dans lequel le canal de communication de fluide est délimité par une seconde rainure de communication prévue sur le corps et sur une face de la plaque d'extrémité orientée vers le corps.

13. Procédé selon l'une quelconque des revendications 10 à 12, dans lequel le corps est pourvu d'une rainure de logement d'aimant s'étendant d'une extrémité à l'autre du corps, et ladite au moins une plaque d'extrémité est pourvue d'une ouverture d'introduction d'aimant correspondant à ladite rainure.

14. Procédé selon la revendication 13, dans lequel l'orifice d'introduction de colle est l'ouverture d'introduction d'aimant.

15. Procédé selon la revendication 13, dans lequel l'orifice d'introduction de colle est un orifice de remplissage de colle distinct de l'ouverture d'introduction d'aimant.
